# EUROPEAN PATENT APPLICATION

(11) **EP 4 016 387 A1**
(43) Date of publication of application: **22.06.2022**
(21) Application number: 21197612.1
(22) Date of filing: 20.09.2021
(51) Int. Cl.: G06K 9/62, G06V 10/25, G06V 20/58

(54) **METHODS AND APPARATUS TO IMPROVE DRIVER-ASSISTANCE VISION SYSTEMS USING OBJECT DETECTION BASED ON MOTION VECTORS**

(30) Priority: 21.12.2020 US 202017129456
(71) Applicant: INTEL Corporation, Santa Clara, CA 95054 (US)
(72) Inventor: LAWRENCE, Sean, 560066 Bangalore (IN); BHAT, Raghavendra Shrinivasa, 560103 Bangalore (IN); CHANDRAN, Pravin Chander, 560103 Bengaluru (IN)
(74) Representative: HGF

(57) **Abstract**

Methods and apparatus to improve driver-assistance vision systems using object detection based on motion vectors are disclosed. An example apparatus includes a motion vector object detection analyzer to generate a motion vector boundary box around an object represented in a first image, the motion vector boundary box generated based on a comparison of the first image relative to a second image. The example apparatus also includes a boundary box analyzer to: determine whether the motion vector boundary box corresponds to any artificial intelligence (AI)-based boundary box generated based on an analysis of the first image using an object detection machine learning model; and, in response to the motion vector boundary box not corresponding to any AI-based boundary box associated with the first image, associate a label with the motion vector boundary, the label to indicate the object detection machine learning model did not recognize the object in the first image.

## Description

### FIELD OF THE DISCLOSURE

This disclosure relates generally to driver-assistance systems, and, more particularly, to methods and apparatus to improve driver-assistance vision systems using object detection based on motion vectors.

### BACKGROUND

In recent years, advancements in the automotive industry have created opportunities for semi-autonomous vehicles and continue to develop technologies that may one day allow vehicles to become fully autonomous. With technologies arising from early systems of anti-lock braking systems and automotive navigation systems, features today such as collision avoidance systems, forward collision warnings, and even automatic parking have become standard in a vast majority of cars. Vehicles and their capabilities continue to evolve and improve with end goals of not only increasing vehicle safety across driving environments, but also enhancing a driver's driving experience when using the vehicle.

### BRIEF DESCRIPTION OF THE DRAWINGS

FIG. 1 is a schematic diagram of an example system disclosed herein that facilitates the detection of objects using motion vectors.
FIG. 2 is a block diagram showing an example implementation of the example vision data analysis system of FIG. 1.
FIG. 3 is an example distribution of object classes used for training an example AI model of a vision-based advanced driver-assistance system (ADAS) of the example vehicle of FIG. 1.
FIG. 4 shows an example first image frame containing two initial example pixel blocks for motion vector derivation.
FIG. 5 shows an example second image frame showing the movement of the content associated with the example pixel blocks of FIG. 4 between the first and second image frames.
FIG. 6 shows the second example image frame of FIG. 5 with a generated motion vector.
FIG. 7 shows an example driving scene captured by one of the camera(s) of the example vehicle of FIG. 1.
FIG. 8 shows generated motion vectors for the example image frame of FIG. 7 relative to a second image frame of the driving scene captured at a different point in time.
FIG. 9 shows the example image frame of FIG. 8 following implementation of an example motion vector intensity thresholding operation.
FIG. 10 shows the example image frame of FIG. 9 following implementation of an example motion vector grouping operation.
FIG. 11 shows the example image frame of FIG. 10 following implementation of an example cluster pruning operation.
FIG. 12 shows an example series of image frames subject to motion vector boundary box analysis in accordance with teachings disclosed herein.
FIG. 13 shows the example series of image frames of FIG. 12 subject to identification and annotation based on an AI vision-based driver-assistance system that includes frames with example unrecognized objects.
FIG. 14 shows the example series of image frames of FIG. 13 with the example unrecognized objects annotated based on the motion vector boundary box analysis of FIG. 12.
FIGS. 15-17 are flowcharts representative of example machine-readable instructions that may be executed to implement the example vision data analysis system of FIGS. 1 and/or 2.
FIG. 18 is a block diagram of an example processing platform structured to execute the example machine-readable instructions of FIGS. 15-17 to implement the example vision data analysis system of FIGS. 1 and/or 2.

The figures are not necessarily to scale. In general, the same reference numbers will be used throughout the drawing(s) and accompanying written description to refer to the same or like parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein "substantially real time" refers to occurrence in a near instantaneous manner recognizing there may be real world delays for computing time, transmission, etc. Thus, unless otherwise specified, "substantially real time" refers to real time +/- 1 second.

### DETAILED DESCRIPTION

An advanced driver-assistance system (ADAS) is an intelligent system integrated into vehicles for improving vehicle safety across various driving conditions. These systems are often vision based and utilize a range of sensors, such as cameras, radars, and LiDAR sensors, to gather information about a vehicle's surrounding environment to alert drivers of objects in the vehicle's vicinity and/or to avoid collisions with impending objects by enabling the vehicle to respond autonomously. For example, such vision-based systems may be implemented to detect and/or locate other vehicles, pedestrians, road signs, and/or other relevant objects and enable the vehicle to slow down, stop, or otherwise adjust the operation of the vehicle to respond to the circumstances indicated by the surrounding environment detected by the driver-assistance vision-based system. Thus, vehicular vision-based driver-assistance systems must be reliable and robust to ensure the safety of the vehicle, occupants of the vehicle, and people and/or property surrounding the vehicle across any given driving environment.

Vision-based driver-assistance systems are capable of performing functions such as decoding captured image data (e.g., a video stream) into individual image frames, analyzing the image frames to detect relevant object(s) and/or condition(s), and determining suitable adjustments to the vehicle's behavior and/or operation depending on the nature of the detected object(s) and/or condition(s). Furthermore, many applications of these vision-based solutions have evolved to incorporate artificial intelligence (AI) using trained neural networks (NNs) (e.g., convolutional neural networks (CNNs)) to perform the image analysis to recognize and annotate identified objects. More particularly, these AI vision-based driver-assistance systems often involve training object detection machine learning models (e.g., CNN models) using images of known road objects such as motorcycles, cars, people, trucks, and buses to recognize such objects when encountered by a vehicle implementing the driver-assistance system. Once an object has been detected and recognized, the driver assistance system annotates the object with a label corresponding to the particular class of objects to which the object was recognized as belonging (e.g., the object class of "car," the object class of "truck," etc.). These trained AI vision-based driver-assistance systems may generate boundary boxes around recognized objects that define the size and location of the objects within a corresponding image frame in which the object was detected. Such boundary boxes simplify the identification and annotation of recognized objects to facilitate subsequent analysis by the vision system to enable the vehicle to determine and implement an appropriate response to the detection of the object.

A limitation in the performance of existing AI vision-based driver-assistance systems is their inability to identify and/or recognize certain objects. When an object is not recognized by a driver assistance system, the object cannot be annotated with a suitable label to indicate the object class to which the object belongs, which can limit the ability of the vehicle to response appropriately to the presence of the object. As used herein, a "recognized" object refers to an object that an AI vision-based driver-assistance system can detect, identify, recognize, and annotate in an image frame with a boundary box and suitable label. In contrast, as used herein an "unrecognized" object of an object that is "not recognized" refers to an object that AI vision-based driver-assistance system cannot detect, identify, or recognize (and, therefore, cannot annotate with a label). There are a number of reasons that a driver-assistance system may not identify and/or recognize a particular object including factors like pose variance, or when an object is oriented in a position that the AI vision-based driver-assistance system was not trained to recognize, partial concealment when driving conditions reduce the visibility and/or sensitivity of the vehicle cameras and/or sensors, or limited training data associated with certain road objects. Thus, an AI vision-based driver-assistance system may not recognize an object because the object has never been encountered before. However, many unrecognized objects are objects that may have been encountered before but are not recognized because of how the object is represented in the particular image frame being analyzed. That is, an object may be recognized in one image frame and the same object may be unrecognized in another image. In other words, as used herein, whether an object is recognized or unrecognized is specific to each image frame in which the object is represented.

As noted above, there are many circumstances that can limit the ability of an AI vision-based driver-assistance system to detect and recognize an object. More specifically, the complexity of driving scenarios in the real-world pose situations such as where lighting in the driving environment may be poor, visibility by the AI vision-based driver-assistance systems may be limited, and/or traffic conditions may introduce object types that the AI vision-based systems have not been initially trained to recognize. Such situations not only severely compromise the safety, reliability, and efficacy of the driver-assistance systems in place, but also require labor-intensive and time-consuming manual intervention to retrain and update the AI model algorithms with annotated images to handle unrecognized objects and to recognize a vast amount of object pose possibilities. Furthermore, although the inclusion of additional sensors to vehicles may at least partially remedy the aforementioned deficiencies of current AI vision-based driver-assistance systems, such attempts result in incurred costs, increased vehicle complexity, as well as time expenditures to restructure the vision-based systems to utilize additional sensor data. Thus, these shortcomings provide opportunities for improvement in the robustness of AI vision-based driver-assistance systems to identify unrecognized objects encountered in driving environments without the need to integrate additional cameras and sensors into vehicles. Examples disclosed herein present a solution using motion vector boundary box generation and analysis to detect and annotate objects not previously recognized by AI vision-based driver-assistance systems for subsequent training and identification.

As used herein, motion vectors are two-dimensional vectors that serve to identify the movement of objects in a scene as captured in successive image frames of the scene. For example, as the content of an image frame, characterized by the objects within the image frame, moves from a first location to a second location across successive image frames, motion vectors are generated to identify movement correlating to each object. The movement of the objects in the scene for which motion vectors are defined is based on relative movement of the objects to the camera(s) that captured the image frames being analyzed. Thus, the movement of an object in the successive image frames of a scene may be the result of the object moving (e.g., a car driving down a road), a change in perspective of the scene due to movement of the camera(s) relative to the scene (e.g., the cameras are on a moving vehicle), or some combination of both.

Although the movement of objects in the real world can be in three-dimensions, motion vectors represent the movement with a two-dimensional vector corresponding to the movement of content within the two-dimensional plane of the successive image frames. That is, blocks of pixels, such as 16x16 pixel blocks, may be compared between two successive image frames to determine whether there is any variation in the position of matching pixel blocks. As used herein, motion vectors define the extent to which the position of a matching block of pixels differs between the two images is an indication of the extent of movement of the object represented by the content associated with the matching block of pixels.

As mentioned above, in vision-based driver-assistance systems where the camera(s) are on or in a vehicle that may be in motion, motion vectors can correspond to objects that are stationary (but moving relative to the moving vehicle) as well as objects that are in motion (independent of movement of the vehicle and the associated camera(s)). In addition to defining a direction of motion, motion vectors also define an intensity of the motion, which corresponds to the amount of movement of an object as represented in the two image frames from which the motion vectors are generated. More particularly, as used herein, the intensity of a motion vector is a function of a relative velocity of the object with respect to the camera(s) capturing the image frames including the object and a distance of the object relative to the camera(s) capturing the image frames. Motion vectors that define both a direction of movement and an intensity of movement relative to camera(s) provide a viable option for performing analysis across image frames to independently detect objects that may not be detected and/or recognized by an AI vision-based driver-assistance system for improved object detection and identification.

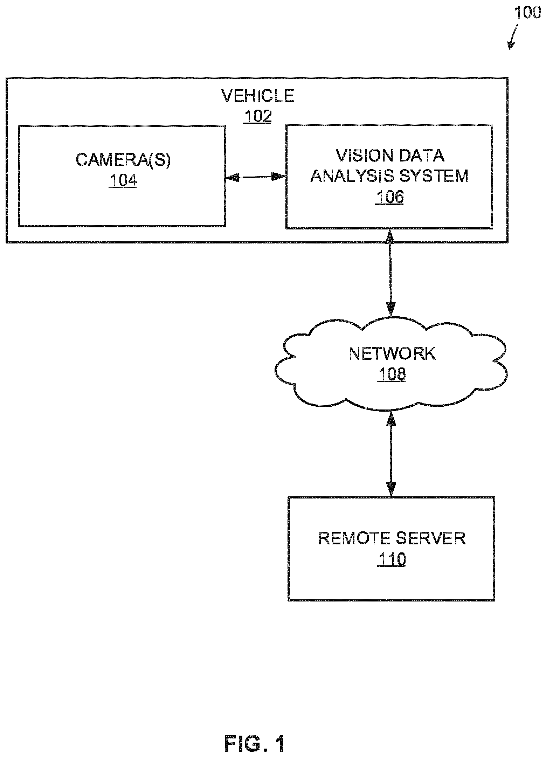

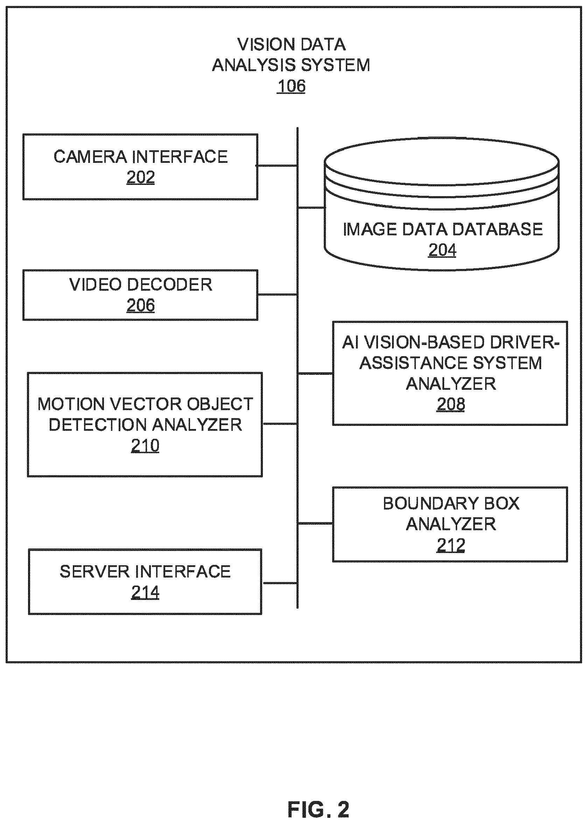

FIG. 1 shows a schematic of an example system 100 that facilitates the detection of objects using motion vectors. The example system 100 of FIG. 1 includes an example vehicle 102 constructed in accordance with teachings disclosed herein. The example vehicle 102 may be any type of vehicle (e.g. a car, a truck, a bus, etc.). Further, the example vehicle 102 may be a manually driven vehicle, a semi-autonomous vehicle, a fully autonomous vehicle, etc. As shown in the illustrated example, the vehicle 102 includes one or more camera(s) 104 to capture image data indicative of objects and/or conditions in a surrounding environment of the vehicle. In some examples, the one or more camera(s) capture individual images and/or a series of images (e.g., a video stream) of the surrounding environment. In some examples, the camera(s) 104 can further capture data indicative of the distance and/or relative speed of objects in relation to the vehicle 102. Outputs of the camera(s) 104 are provided to an example vision data analysis system 106 that implements the data processing functionality of a vision-based driver-assistance system to detect and annotate recognized objects in the surrounding environment based on an AI vision-based analysis of images captured by the camera(s) 104. The vision-based driver-assistance system may be implemented using any suitable ADAS technology now existing or subsequently developed. Furthermore, the example vision data analysis system 106 analyzes the images captured by the camera(s) 104 to generate motion vectors indicative of the movement of objects in the surrounding environment. In some examples, the vision data analysis system 106 uses the motion vectors to detect objects independent of the vision-based driver-assistance system. Thus, the objects detected based on the motion vectors may correspond to objects that are either recognized or not recognized through the AI vision-based analysis of the vision-based driver-assistance system. The vision data analysis system 106 performs analysis of objects detected by the motion vector analysis and objects detected by the AI vision-based system to identify and annotate any objects that were not initially recognized by the AI vision-based system. In some examples, the image frames containing the objects that were initially unrecognized by the AI vision-based system are collected for use as additional training data to improve the AI model of the AI vision-based system. Further detail regarding the implementation of the example vision data analysis system 106 is provided below in connection with FIG. 2.

In some examples, processing of the data acquired by the camera(s) 104 is performed entirely locally by the example vision data analysis system 106. In other examples, the vision data analysis system 106 transmits, via a network 108, data to a remote server 110 for processing. In some examples, the vision data analysis system 106 transmits the data acquired by the camera(s) 104 of the example vehicle 102 to the remote server 110 for processing. Additionally or alternatively, in some examples, the vision data analysis system 106 performs initial processing of the image data and then transmits the output of such processing to the remote server 110 for further processing. Once the data is processed remotely by the remote server 110, the resulting data can be transmitted back to the vision data analysis system 106 for further analysis and/or subsequent use. In some examples, the vision data analysis system 106 may perform all processing of the image data but nevertheless transmit the output results to the remote server 110 for storage and/or for other purposes (e.g., to facilitate the development of new training data sets for the AI model of the vision-based driver-assistance system implemented by the vision data analysis system 106). Thus, data processing can be done locally, remotely or any combination of both by the example system of FIG. 1.

FIG. 2 shows example implementation of the example vision data analysis system 106 of FIG. 1. As shown in the illustrated example, the vision data analysis system 106 includes an example camera interface 202, an example image data database 204, an example video decoder 206, an example AI vision-based driver-assistance system analyzer 208 (or driver-assistance system analyzer 208 for short), an example motion vector object detection analyzer 210, an example boundary box analyzer 212, and an example server interface 214.

The example camera interface 202 communicates with the vehicle camera(s) 104 to receive image data (e.g., a video stream) for processing and/or analysis by other components of the vision data analysis system 106. In some examples, the image data is in the form of a video and/or still images captured by the one or more camera(s)104 located in or on the example vehicle 102. The image data is representative of a view of the environment that is in front of the example vehicle 102, to the side of the vehicle 102, to the rear of the vehicle 102, and/or in any other direction.

The example image data database 204 stores the raw image data received by the example camera interface 202. In some examples, the image data may undergo pre-processing before being stored in the image data database 204. In some examples, during the operation of the example vehicle 102, the image data database 204 stores the incoming image data captured by the camera(s) 104 and received via the example camera interface 202 in substantially real-time. The stored image data can then be accessed and retrieved from the image data database 204 for further processing by other elements of the example vision data analysis system 106. In some examples, the image data database 204 also stores the results of such processing by the other elements of the example vision data analysis system 106. For instance, in some examples, the image data database 204 stores individual image frames of the raw image data that have been analyzed and annotated with boundary boxes around detected objects and associated labels.

The example video decoder 206 accesses the image data stored in the image data database 204 and decodes and/or otherwise performing pre-processing of the image data to generate a series of image frames. In some examples, the series of image frames may correspond to consecutive or successive video frames within a video stream captured by the camera(s) 104. In some examples, the series of image frames corresponds to a sampling of less than all image frames in the video stream (e.g., every other video frame, every third video frame, etc.). In some examples, the video decoder 206 organizes the individual image frames in an order based on a timestamp of the image frame. For example, the order of the resulting image frames can be analogous to the order of when they appear in the input video stream. In some examples, the order of the image frames remains consistent as each image frame is processed by example elements. In some examples, the decoded image frames generated by the example video decoder 206 are stored in the example image data database 204 for further analysis and processing.

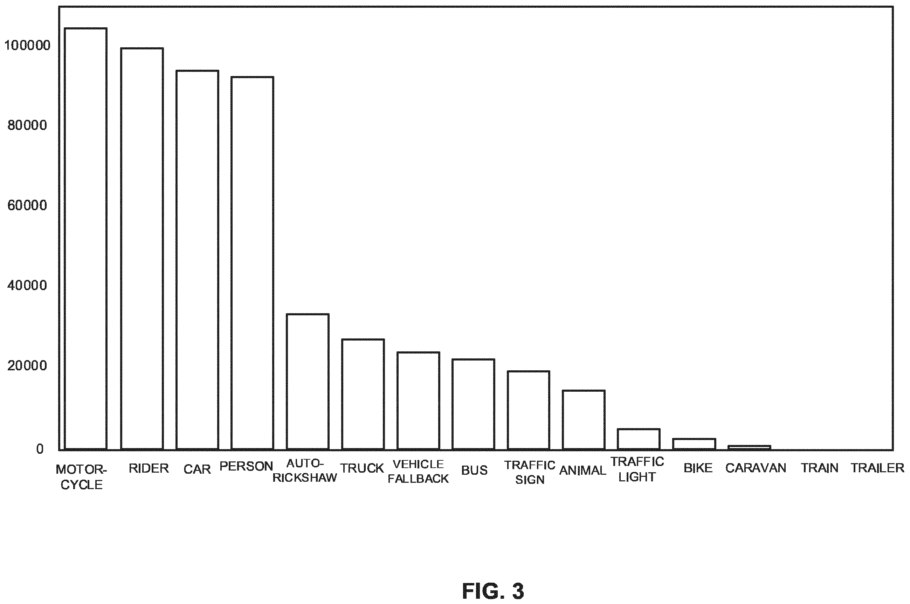

The example AI vision-based driver-assistance system analyzer 208 analyzes ones of the image frames to detect objects within the image frames. More particularly, in some examples, the AI vision-based driver-assistance system analyzer 208 executes a vision-based AI model that analyzes the images to identify recognized objects within the images frames, generate boundary boxes around the recognized objects, and associate a suitable label to each recognized object. In some examples, the vision-based AI model may be any suitable model (e.g., a CNN) now known or later developed for a vision-based driver-assistance system for detection and recognition of objects in images capturing a surrounding environment of a vehicle (e.g., the vehicle 102). Thus, the AI model is trained with a dataset of training images containing known objects that have been labelled according to the object classes to which the known objects belong. Typically, the objects represented in the training images dataset correspond to objects that are commonly encountered on a road driven by the example vehicle 102 (e.g., a car, a motorcycle, a pedestrian, etc.). Further, the training images dataset may also include images containing less commonly encountered objects (e.g., an autorickshaw, an animal, a train, etc.). Typically, such training datasets include far more images containing commonly encountered objects than images of less commonly encountered objects. For instance, FIG. 3 shows an example distribution of the number of objects represented in a particular training images dataset for an advanced driver-assistance system for different object classes.

As seen in FIG. 3, the skewed distribution of object classes shows that the AI model is not trained equally across all object classes. Rather, the AI model is trained with more training images for the object classes corresponding to motorcycles, riders, cars, and people than other classes of objects that are more scarcely represented in the training dataset. Limited availability of training materials (e.g. annotated images of certain object classes) or limited AI model training with certain classes can cause the AI model to not detect and recognize objects pertaining to those classes when captured by the camera(s) 104 of the example vehicle 102. As a result, the AI model is less likely to recognize objects that are scarcely represented in the training dataset relative to the common objects because the AI model is trained using fewer training images containing the scarce objects than the commonly encountered objects. More particularly, the AI model is less likely to recognize objects when trained on a relatively limited set of training images (as seen by FIG. 3 with caravan, train and trailer images) because the training may be insufficient to account for all the different scenarios in which the scarce objects are encountered. For instance, the AI model may fail to recognize an autorickshaw encountered by the example vehicle 102 (despite the training dataset of FIG. 3 including an object class corresponding to autorickshaws) because, in the particular circumstances of the encounter, the autorickshaw is partially concealed from view, poorly distinguished in the image frame by the camera(s) 104 or is oriented in a position, in the captured image frame being analyzed, that does not correspond to the limited set of training images that were used to train the AI model to recognize autorickshaws.

When the AI model recognizes an object in an image frame, the example AI vision-based driver-assistance system analyzer 208 generates a boundary box around the object so that the position of the object within the image can be tracked as the vehicle 102 continues to move. The example AI vision-based driver-assistance system analyzer 208 further annotates the generated boundary box in the image frame with a label corresponding to the associated object class of the object. However, if the AI model, executed by the AI vision-based driver-assistance system analyzer 208, is unable to recognize an object, no boundary box will be generated, and no label will be assigned. Consequently, the unrecognized object poses a safety hazard to the example vehicle 102 if not ultimately identified and recognized so that the operation of the vehicle 102 can be appropriately adjusted in response to the presence of the object.

The example motion vector object detection analyzer 210 analyzes ones of the image frames in parallel to the example AI vision-based driver-assistance system analyzer 208 to independently detect objects within the image frames. More particularly, the example motion vector object detection analyzer 210 compares a particular block of pixels (e.g. a 16x16 pixel block, a 32x32 pixel block) in a first image frame to corresponding blocks of pixels at various locations across a second image frame to determine if a match (within some threshold tolerance) between the pixels in the two image frames can be identified. If a block of pixels in the second image frame is found to match the particular block of pixels in the first image, the motion vector object detection analyzer 210 may infer that the matching pixels are associated with the same object within the scene captured by the two image frames. The example motion vector object detection analyzer 210 compares the position of the matching pixels blocks in each of the two image frames to determine the displacement of the matching pixels between two image frames (e.g., number of pixels shifted in either the X or Y direction in the image frames). The motion vector object detection analyzer 210 generates a motion vector based on the X and Y displacement of the matching pixels between the two image frames within. In some examples, the first and second image frames correspond to adjacent or successive image frames in a video stream or series of images captured by the camera(s) 104 with the second image frame being captured at a later point in time than the first image frame. In such examples, the displacement of the pixels is represented as moving from the first image frame to the second image frame so as to represent the direction of movement of the underlying object represented by the pixels through time.

Motion vector analysis can be used to easily detect moving objects within a scene when a camera capturing image frames being analyzed is stationary because the pixels associated with stationary objects will remain in the same location in each successive image of the scene. However, the problem of identifying moving objects becomes more challenging when the camera is moving relative to the surrounding environment as is the case of the camera(s) 104 of FIG. 1 when the vehicle 102 is moving. In such situations, movement of the camera(s) 104 relative to the surrounding environment (based on movement of the vehicle 102) can result in pixels associated with stationary objects in the surrounding environment (e.g., buildings, the ground, trees, etc.) appearing to move to different locations within successive image frames of the environment. Accordingly, in some examples, to filter out background environment (e.g., the stationary road, traffic lights, buildings, etc.) from moving objects (e.g., other vehicles, pedestrians, etc.), the motion vectors generated by the motion vector object detection analyzer 210 are filtered based on an intensity of the motion vector. As used herein, the intensity of a motion vector refers to an amount of displacement of matching pixels between two image frames beings compared. That is, the larger the displacement of the pixels, the larger the intensity of the motion vector.

The intensity of a motion vector generated for a pair of image frames is a function of the speed of the object represented by the matching pixels underlying the motion vector relative to the speed of the camera(s) 104 capturing the image frames (which correspond to the speed of the vehicle 102). For instance, consider a separate vehicle that is moving in the same direction and at approximately the same speed as the vehicle 102 of FIG. 1 (e.g., the relative speed is approximately 0). In such a scenario, the separate vehicle will be represented by similarly positioned pixels in successive image frames resulting in relatively small pixel displacement between successive image frames and, therefore, relatively low intensity motion vectors. By contrast, if the separate vehicle is passing the vehicle 102 of FIG. 1 and/or moving in the opposite direction, the change in position of pixels representing the separate vehicle in successive image frames is likely to change significantly. As a result, the intensity of associated motion vectors will be relatively high. Relatively high intensity motion vectors result even when an object is moving directly towards or away from the camera(s) 104 of the vehicle 102. While such objects are in the same position relative to the camera(s) 104 and, therefore, not moving across the field of view of the camera(s) 104, the size of such objects would either increase or decrease as the relative distance between the object and the vehicle 102 decreases or increases. As a result, displacement of the pixels representative of the object in successive image frames would follow an outwardly expanding direction (e.g. the pixels would be shifted in the X and/or Y direction toward the outer edges of the image frames) as the object approaches the example vehicle 102. Furthermore, the rate of expansion of the matching pixels between successive frames would increase as the object gets closer to the vehicle 102. Conversely, displacement of the pixels representative of an object moving farther away from vehicle 102 would follow an inwardly contracting direction (e.g. the pixels would be shifted in the X and/or Y direction toward a center of the represented object in the image frames) that would become smaller and smaller as the object continues to get farther away.

In addition to the intensity of motion vectors being based on the relative velocity of the object represented by the underlying matching pixels, motion vector intensity is also a function of the distance of an object relative to the camera(s) 104 in or on the example vehicle 102. For instance, while an airplane flying overhead may be moving much faster than the vehicle 102, because the airplane is so far into the distance, the displacement of pixels representative of the airplane in successive image frames may be relatively small. As a result, the intensity of motion vectors generated based on such pixels would be relatively low. Of course, objects that are far away and not moving very fast or not at all (stationary objects) are likely to be associated with relatively low intensity motion vectors. By contrast, a truck that is passing the vehicle 102 of FIG. 1 by travelling only a few miles faster than the vehicle 102 (e.g., the relative velocity between the truck and vehicle is relatively small) may nevertheless result in motion vector intensities that are relatively large because the truck is so close to the camera(s) 104 on the vehicle 102.

As a general matter, objects associated with relatively low motion vector intensities (e.g., relatively far away and/or objects that are moving in the same direction and at the same general speed as the vehicle 102) are assumed to be less critical to the safe operation of the vehicle 102. By contrast, objects associated with relatively high motion vector intensities (e.g., because they are relatively close to the vehicle and/or have a speed relative to the vehicle that is relatively high) may pose potential safety concerns. Accordingly, in some examples, the motion vector object detection analyzer 210 filters out motion vectors with relatively low intensity (e.g., below a threshold) to isolate motion vectors with relatively high intensity for further analysis.

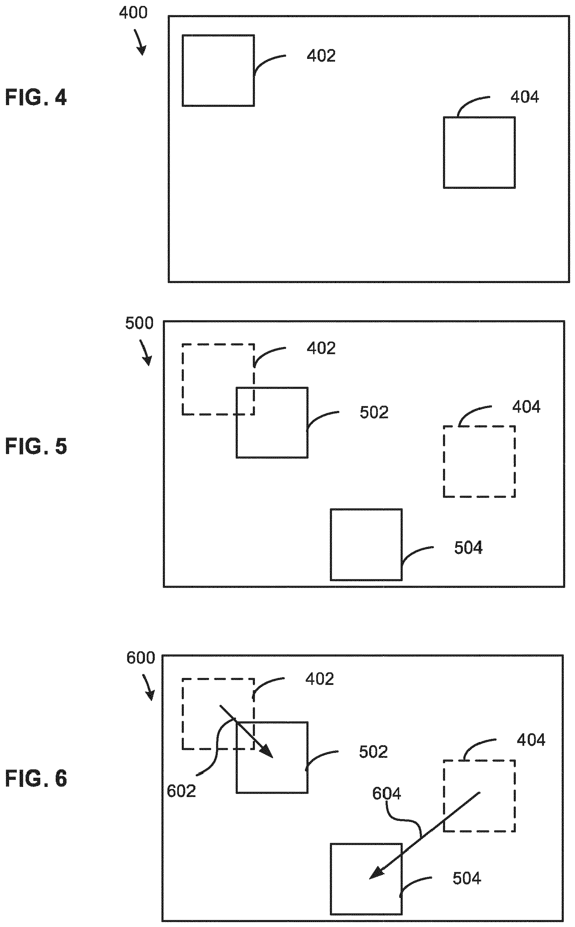

FIGS. 4-6 show an example of motion vector derivation for two example pixel blocks between two image frames. FIG. 4 shows a first image frame 400 captured at a first point in time and FIG. 5 shows a second image frame 500 captured at a second point time after the first point in time. FIG. 4 shows the two example pixel blocks 402, 404 in initial positions within the first image frame 400. FIG. 5 shows the location of respective matching pixel blocks 502, 504 in the second image frame 500. The change in position from the initial positions of the pixel blocks 402, 404 in the first image frame 400 as seen in FIG. 4 to the new positions in the second image frame 500 of FIG. 5 is based on the movement of objects represented by the pixels blocks 402, 404, 502, 504 relative to the camera at the first and second points in time when the image frames 400, 500 were captured. For purposes of explanation, the position of the pixels blocks 402, 404 in FIG. 4 are repeated in FIG. 5 in broken lines to demonstrate the amount of displacement of the two pairs of pixels blocks 402, 404, 502, 504 as between the two image frames 400, 500. FIG. 6 shows example motion vectors (represented by the arrows 602, 604) corresponding to the two pairs of matching pixel blocks. As can be seen by FIG. 6, the first pair of matching pixel blocks 402, 502 is associated with a much smaller motion vector 602 than the motion vector 604 associated with the second pair of matching pixel blocks 404, 504. Thus, the second motion vector 604 has a greater intensity than the first motion vector 602.

As mentioned above, in some examples, the motion vector object detection analyzer 210 uses the intensity of motion vectors to identify motion vectors associated with an object that may be of particular importance to the safety and/or operation of the vehicle 102 and/or to eliminate motion vectors associated with an object identified as less important (e.g., that may be ignored without compromising the safety and/or operation of the vehicle 102). The example motion vector object detection analyzer 210 applies a thresholding function by analyzing the motion vectors generated for an image frame (with respect to a second image frame) to identify a subset of motion vectors that satisfy (e.g., exceeds) an intensity threshold. The subset of motion vectors that satisfy the threshold are identified for further analysis. Isolating motion vectors with relatively large intensities in this manner can facilitate the motion vector object detection analyzer 210 in identifying motion vectors that may be of particular importance to the operation of the vehicle 102 because the objects are either close in proximity to the vehicle camera(s) 104 of the example vehicle 102 or have a higher relative velocity than other surrounding objects with respect to the vehicle 102. In contrast, objects that are far away from the vehicle camera(s) 104 (e.g. a cloud, a bird, or a tree) and/or are moving with the traffic followed by the vehicle 102 are associated with smaller motion vector intensities that may be ignored as less significant to the operation of the vehicle 102 and, thus, eliminated from further analysis and processing. In some examples, motion vector intensity thresholds for differentiating between motion vectors of importance can vary across vehicle types, object classes, surrounding environments or other criteria. Further, in some examples, the intensity threshold is a fixed value. In some examples, the intensity threshold may vary in response to the speed of the vehicle 102. In other examples, the intensity threshold is variably defined so that a particular proportion of the motion vectors satisfy the threshold.

Following the identification of a subset of motion vectors satisfying a threshold, the example motion vector object detection analyzer 210 groups the motion vectors in the subset into one or more clusters of motion vectors based on a spatial proximity threshold. That is, the spatial proximity threshold defines a minimum distance that must be between a first motion vector and a second motion vector for both motion vectors to be grouped into the same cluster. In some examples, the spatial proximity threshold can vary across vehicles, objects, surrounding environments or other criteria. In some examples, once a cluster has been identified, the motion vector object detection analyzer 210 generates a boundary box that circumscribes the cluster to demarcate a particular object corresponding to the cluster of motion vectors. That is, in some examples, the close proximity of motion vectors is assumed to indicate that the motion vectors are associated with the same object. As such, by clustering motion vectors in close proximity, complete objects within the environment surrounding the vehicle 102 can be identified and demarcated with a boundary box to facilitate subsequent tracking and analysis. For the sake of clarity, a boundary box generated by the AI vision-based driver-assistance system analyzer 208 (using vision-based AI models to detect and recognize objects) is referred to herein as an AI-based boundary box. By contrast, a boundary box generated by the motion vector object detection analyzer 210 (using the motion vector derivation and subsequent clustering process) is referred to herein as a motion vector boundary box.

After the motion vector object detection analyzer 210 generates a motion vector boundary box for each cluster of motion vectors identified in an image frame, the example motion vector object detection analyzer 210 applies a pruning threshold to the boundary boxes to eliminate boundary boxes associated with objects that do not appear to be of particular importance to the operation of the vehicle 102. In some examples, the pruning threshold is defined by a sample count of motion vectors within the generated boundary box. That is, in some examples, only boundary boxes (or the associated clusters) that have at least a threshold number of motion vectors are retained for further analysis while clusters with less than the threshold are discarded or ignored. Additionally or alternatively, the pruning threshold is defined by a size of the boundary box (e.g., area or number of pixels of the image frame circumscribed by the boundary box). In some examples, both the number of motion vectors in a cluster as well as the size of the resulting boundary box are used to filter or prune boundary boxes and/or motion vector clusters that are not to be used for further analysis. In some examples, a boundary box having a size and/or motion vector count that is below the pruning threshold is assumed to correspond to an object that is far away from the vehicle 102 and/or is small enough in size to not be a relevant to the operation of the example vehicle 102. As a result, the boundary box and associated cluster of motion vectors for such an object may be eliminated from further processing and analysis. In some examples, the pruning threshold can vary across vehicles, object types, surrounding environments or other criteria.

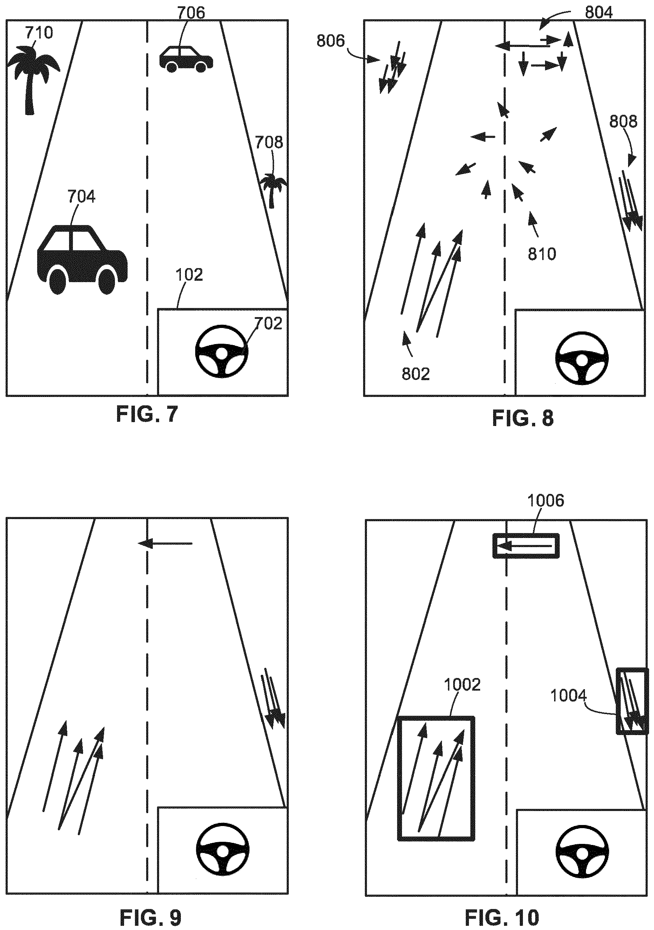

FIGS. 7-11 illustrate example stages in the generation of motion vector boundary boxes by the example motion vector object detection analyzer 210 for identifying objects in an image frame in accordance with teachings disclosed herein. FIG. 7 shows an example image frame depicting a driving scene captured by the camera(s) 104 of the example vehicle 102 of FIG. 1. For purposes of explanation, the location the vehicle 102 within the scene is represented by a box including a steering wheel icon 702 in the lower right-hand corner of each image frame of FIGS. 7-11. As shown in the illustrated example, the scene includes a first car 704 that is relatively close to the vehicle 102 and a second car 706 off in the distance. Further, the scene includes a first tree 708 that is relatively close to the vehicle 102 and a second tree 710 that is farther off in the distance. In this example, both of the cars 704, 706 are moving along the same road as the vehicle 102. By contrast, the trees 708, 710 are stationary objects. However, from the perspective of the vehicle 102, the trees appear to be moving because the vehicle 102 is moving. As such, when blocks of pixels in successive image frames captured by the camera are compared, motion vectors may be generated for pixels associated with both the moving objects (e.g., the cars 704, 706) as well as the stationary objects (e.g., the trees 708, 710). More generally, motion vectors with non-zero intensities are likely for much of the scene because the perspective of the scene changes as the vehicle 102 moves along the road.

FIG. 8 shows the result of the generation of motion vectors across the entirety of the image frame as described above. In particular, a first set of motion vectors 802 indicate the relative movement of the first car 704, a second set of motion vectors 804 indicate of the relative movement of the second car 706, a third set of motion vectors 806 indicate of the relative movement of the first tree 708, and a fourth set of motion vectors 808 indicate of the relative movement of the second tree 710. Further, as shown in the illustrated examples, additional stray motion vectors 810 indicate relative movement of the road on which the vehicle 102 is travelling. More particularly, the motion vectors 802, 804, 806, 808, 810 shown in FIG. 8 are generated by comparing specific blocks of pixels with a different (e.g., previously captured) image of the scene. In some examples, different blocks of pixels corresponding to every portion of the image frame are compared to the different image to identify matching blocks of pixels. The displacement of the position between matching pairs of the pixel blocks are used to define the motion vectors and the associated intensity (e.g. amount) of displacement. The additional stray motion vectors 810 are relatively small (e.g., relatively low intensity) because the road appears substantially the same between successive image frames such that a particular block of pixels in a first image frame may be matched to a different region of the road in a second image frame that appears the same rather being matched to the exact same portion of road represented in both image frames.

FIG. 9 shows the image frame with the results of the motion vector object detection analyzer 210 applying a thresholding function to eliminate motion vectors represented in FIG. 8 that do not satisfy the threshold. Thus, the image frame of FIG. 9 shows motion vectors that have an intensity (e.g., amount of pixel displacement) that satisfied (e.g., exceeds) the motion vector intensity threshold. The motion vectors with relatively high intensities are identified and retained for further analysis while the other motion vectors that did not satisfy the threshold are ignored or filtered out. More particularly, as shown in the illustrated example of FIG. 9, only motion vectors at the positions within the image frame corresponding to the two cars 704, 706, and the first tree 708 are retained for further processing.

FIG. 10 shows the results of the motion vector object detection analyzer 210 clustering the remaining motion vectors based on a spatial proximity metric (e.g., the spatial proximity threshold) into groups that are demarcated by separate motion vector boundary boxes 1002, 1004, 1006 around each cluster of motion vectors. As can be seen by comparison of FIGS. 7 and 10, the first motion vector boundary box 1002 is at the location corresponding to the first car 704, the second motion vector boundary box 1004 is at the location corresponding to the first tree 708, and the third motion vector boundary box 1006 is at the location corresponding to the second car 706.

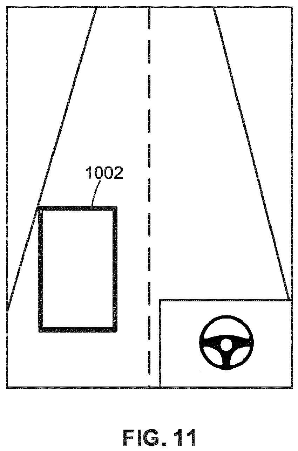

FIG. 11 shows the results of the motion vector object detection analyzer 210 applying a pruning threshold to the motion vector boundary boxes 1002, 1004, 1006 shown in FIG. 10 to eliminate boundary boxes that do not meet the pruning threshold. As described above, the pruning threshold may define a threshold number of motion vectors to be included in a particular cluster to be retained for further analysis. In the illustrated example of FIG. 10, the third motion vector boundary box 1006 includes only one motion vector and is, therefore, discarded. Additionally or alternatively, the pruning threshold may define a threshold size of a motion boundary box to be retained for further analysis. Thus, although the second motion vector boundary box 1004 included multiple motion vectors, the boundary box 1004 is nevertheless discarded because the size of the boundary box 1004 does not satisfy the corresponding threshold. As a result, only the first motion vector boundary box 1002 associated with the first car 704 remains for further processing as represented in FIG. 11.

Returning to FIG. 2, the example boundary box analyzer 212 compares outputs of the example AI vision-based driver-assistance system analyzer 208 and the example motion vector object detection analyzer 210 to determine whether there are any objects captured in an image frame under analysis that was not detected or recognized by the AI vision-based driver-assistance system analyzer 208. As described above, the AI vision-based driver-assistance system analyzer 208 outputs AI-based boundary boxes associated with each object in an image frame that was recognized by the AI model executed by the AI vision-based driver-assistance system analyzer 208. The motion vector object detection analyzer 210 outputs motion vector boundary boxes associated with detected objects identified based on a cluster of relatively high intensity motion vectors. In some examples, the boundary box analyzer 212 compares these outputs to determine whether the motion vector boundary box corresponds to an AI-based boundary box. In some examples, the example boundary box analyzer 212 performs the comparison by comparing that size, shape, and/or location of the motion vector boundary box to the size, shape, and/or location of the AI-based boundary box in each image frame. For instance, assume that the motion vector object detection analyzer 210 generates a motion vector boundary box of a particular width and height that is located at a particular X and Y position of the image frame. Based on this output, the example boundary box analyzer 212 determines whether there is a corresponding AI-based boundary box defined by the AI vision-based driver-assistance system analyzer 208 with a similar height and width and located at a similar X and Y position within the image frame. If so, the example boundary box analyzer 212 confirms a match between the motion vector boundary box and the AI-based boundary box in the image frame. If the AI vision-based driver-assistance system analyzer 208 did not generate an AI-based boundary box at the corresponding location, the example boundary box analyzer 212 infers that the AI vision-based driver-assistance system analyzer 208 failed to recognize an object at that location. Accordingly, the example boundary box analyzer 212 flags the motion vector boundary box output by the motion vector object detection analyzer 210 as being associated with an object for which the AI model of the AI vision-based driver-assistance system analyzer 208 may need additional training to improve its ability to recognize such objects in the future.

If a match is confirmed between a motion vector boundary box and a AI-based boundary box, the example boundary box analyzer 212 associates or annotates the motion vector boundary box in the particular image frame with the label associated with the corresponding AI-based boundary box defining the object class of the underlying recognized object (e.g. "car", "person", "motorcycle"). Once a motion vector boundary box that matches a corresponding AI-based boundary box in a particular image frame has been annotated with a corresponding label, the image frame and all meta information associated with the image frame (e.g. a timestamp, boundary box coordinates, associated labels, etc.) are stored in the image data database 204. Thereafter, the example boundary box analyzer 212 may continue to analyze the image frame based on additional motion vector boundary boxes to be compared with other AI-based boundary boxes in the image frame for classification.

In some examples, if the boundary box analyzer 212 determines that a particular motion vector boundary box (generated by the motion vector object detection analyzer 210) does not match any AI-based boundary boxes (generated by the driver-assistance system analyzer 208), the boundary box analyzer 212 infers that the objects represented by the motion vector boundary box corresponds to an object that was not recognized by the driver-assistance system analyzer 208. Accordingly, in some such examples, the boundary box analyzer 212 annotates the particular motion vector boundary box with a label indicated or classifying the object as an "unrecognized object." The motion vector boundary box may then be stored in the image data database 204 along with all relevant metadata including the "unrecognized object" label.

As mentioned above, whether an object is recognized or unrecognized by the driver-assistance system analyzer 208 is specific to each image frame capturing the object. That is, an object may be recognized by the driver-assistance system analyzer 208 in one image frame but unrecognized in another frame. As described above, there are a variety of reasons why an object may not be recognized by the example AI vision-based driver-assistance system analyzer 208 in a particular image. For example, an object may not be recognized because the object is a scarce object associated with a relatively limited set of training images used to train the AI model executed by the AI vision-based driver-assistance system analyzer 208. Additionally or alternatively, an object may not be recognized (whether the object is scarcely represented in the training dataset or not) because the object is partially concealed in the image frame, the object is positioned and/or oriented relative to the camera(s) 104 in an irregular or uncommon manner, and/or other factors affecting how the object is represented in the image frame being analyzed.

Partial concealment, irregular pose, and/or other such factors affecting the appearance of an object within an image frame are typically temporary in nature. As a result, while the AI vision-based driver-assistance system analyzer 208 may not detect and/or recognize the object at one point in time, the AI vision-based driver-assistance system analyzer 208 may be able to recognize the object at a different point in time (e.g., the object becomes fully visible, the object moves to a more common pose, etc.). Accordingly, in some examples, the comparison of motion vector boundary boxes to the AI-based boundary boxes are compared across time. That is, when the example boundary box analyzer 212 determines that a particular motion vector boundary box does not match any AI-based boundary boxes in a corresponding image frame, before annotating the motion boundary box as being associated with an unrecognized object, the boundary box analyzer 212 may search previously analyzed image frames to determine if the corresponding motion vector boundary boxes were ever matched to an AI-based boundary box. That is, while the driver-assistance system analyzer 208 may not have recognized the object in the current image frame being analyzed, if the driver-assistance system analyzer 208 recognized the same object in the previous image frame, the boundary box analyzer 212 may use the label associated with the corresponding motion vector boundary box in the previous image frame (which would be something other than "unrecognized object") as the label assigned to the motion vector boundary box in the current image frame under analysis.

If there are no previous image frames in which the driver-assistance system analyzer 208 was able to recognize a particular object such that no motion vector boundary boxes associated with the object have a specific label, then the motion vector boundary boxes would be annotated a label indicating they correspond to an unrecognized object. However, if the example boundary box analyzer 212 later identifies a match between a motion vector boundary box associated with the same object and a corresponding AI-based boundary box in a subsequently analyzed image frame, the metadata associated with the previously analyzed image frames may be updated to remove the "unrecognized object" label for the associated motion vector boundary boxes and replace it with the label corresponding to the object in the matching AI-based boundary box of the subsequently analyzed image frame.

To properly associate corresponding motion vector boundary boxes across multiple different image frames that do not match a corresponding AI-based boundary box, the example boundary boxes analyzer 212 may assign an index number to each motion vector boundary box that is annotated with an unrecognized object label. In some examples, the same index number is used across multiple different image frames so long as the motion vector boundary boxes correspond to the same underlying object represented in the image frames. In this way, once a specific label can be identified for the object based on a motion vector boundary box in the series of images matching an AI-based boundary box, the specific label can be applied to all motion vector boundary boxes in the previous images frames with the same index. Additionally or alternatively, the index may be a running number index that increases with each subsequent image frame in which a motion vector boundary box is generated that does not match with a corresponding AI-based boundary box. In this manner, the running index number defines how many image frames have unrecognized objects that can be updated with a specific label once the correct label is determined.

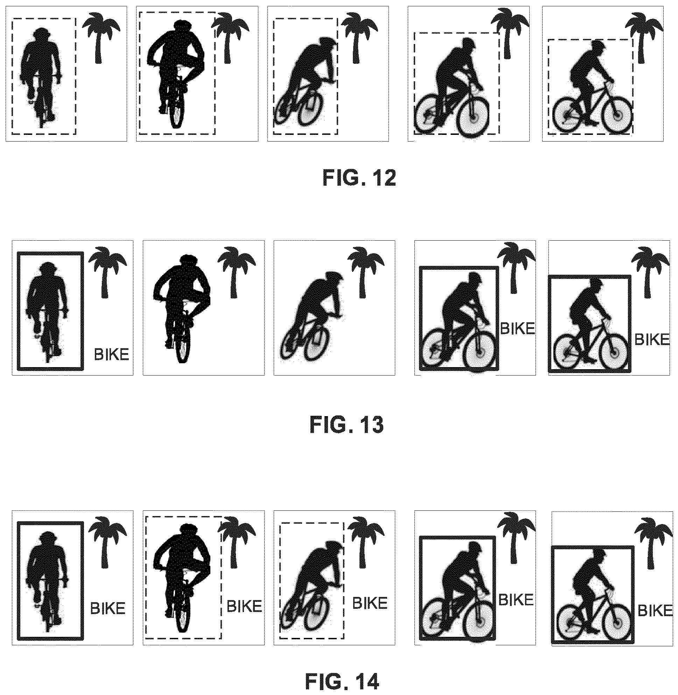

FIGS. 12-14 show examples of a series of image frames subject to analysis by the example system disclosed herein as seen by the camera(s) 104 of the example vehicle 102 of FIG. 1. FIG. 12 shows the series of image frames processed by the example motion vector object detection analyzer 210. Each image frame contains a boundary box around the detected biker based on generated motion vectors from analysis of the biker's characteristics (e.g. a velocity, a distance from the camera(s) 104, or a direction of movement across image frames). FIG. 13 shows the series of image frames processed by the example AI vision-based driver-assistance system analyzer 208. In the illustrated example of FIG. 13, the first, fourth, and fifth image frames in the series include AI-vision based boundary boxes around the biker indicating the AI vision-based driver-assistance system analyzer 208 recognized the biker in those images. Based on the recognition of the biker, the AI-based boundary boxes in the first, fourth, and fifth image frame in FIG. 13 are also annotated with a label (e.g., "BIKE") to classify the object. However, in this example, the driver-assistance system analyzer 208 failed to recognize the biker in the second and third image frames in the series. As a result, the second and third image frames do not include an AI-based boundary or any associated label. This shortcoming may have been caused by limited image data when training the AI model resulting in the AI model to not recognize and annotate the biker if the biker was partially concealed, or oriented in the image frame in a way that the AI model was not been trained to recognize. FIG. 14 shows the series of image frames after processing by the example boundary box analyzer 212. As shown in the illustrate example, the motion vector boundary boxes in the first, fourth, and fifth image frames of FIG. 12 match the corresponding AI-based boundary boxes in the first, fourth, and fifth image frames of FIG. 12. As a result, the boundary box analyzer 112 applies the label associated with the AI-based boundary boxes in FIG. 13 to the corresponding motion vector boundary boxes in FIG. 12. However, in the second and third image frames, no AI-based boundary box exists that matches the motion vector boundary boxes of those image frames. Thus, the boundary box analyzer 212 may determine that the objects in the second and third image frames identified in FIG. 12 have not been recognized by the driver-assistance system analyzer 208 as represented in FIG. 13. However, rather than annotating such motion vector boundary boxes with a label indicating the object is not recognized, in this examples, the boundary box analyzer 212 retrieves the label from the adjacent image frames in which the motion vector boundary boxes were matched to corresponding AI-based boundary boxes. As a result, the two image frames containing the biker that were originally not recognized and annotated with a corresponding label by the example AI vision-based driver-assistance system analyzer 208 are updated to include motion vector boundary boxes and object associated labels. Thus, FIG. 14 shows the series of image frames now all recognized and labeled for interpretation by the example vehicle 102.

The example server interface 214 allows for communication of the example vision data analysis system 106, and thus the example vehicle 102, with a remote server 110 for processing the acquired data remotely.

While an example manner of implementing the vision data analysis system 106 of FIG. 1 is illustrated in FIG. 2, one or more of the elements, processes and/or devices illustrated in FIG. 2 may be combined, divided, re-arranged, omitted, eliminated and/or implemented in any other way. Further, the example camera interface 202, the example image data database 204, the example video decoder 206, the example AI vision-based driver-assistance system analyzer 208, the example motion vector object detection analyzer 210, the example boundary box analyzer 212, the example server interface 214 and/or, more generally, the example vision data analysis system 106 of FIG. 2 may be implemented by hardware, software, firmware and/or any combination of hardware, software and/or firmware. Thus, for example, any of the example camera interface 202, the example image data database 204, the example video decoder 206, the example AI vision-based driver-assistance system analyzer 208, the example motion vector object detection analyzer 210, the example boundary box analyzer 212 the example server interface 214 and/or, more generally, the example vision data analysis system 106 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example camera interface 202, the example image data database 204, the example video decoder 206, the example AI vision-based driver-assistance system analyzer 208, the example motion vector object detection analyzer 210, the example boundary box analyzer 212, and/or the example server interface 214 is/are hereby expressly defined to include a non-transitory computer readable storage device or storage disk such as a memory, a digital versatile disk (DVD), a compact disk (CD), a Blu-ray disk, etc. including the software and/or firmware. Further still, the example vision data analysis system 106 of FIG. 1 may include one or more elements, processes and/or devices in addition to, or instead of, those illustrated in FIG. 2, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

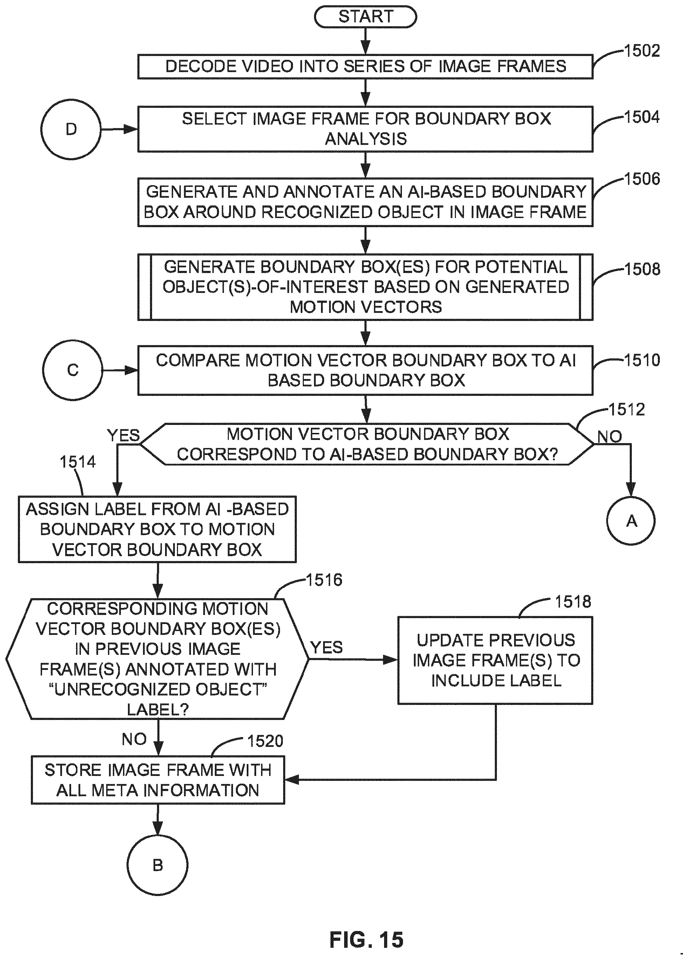

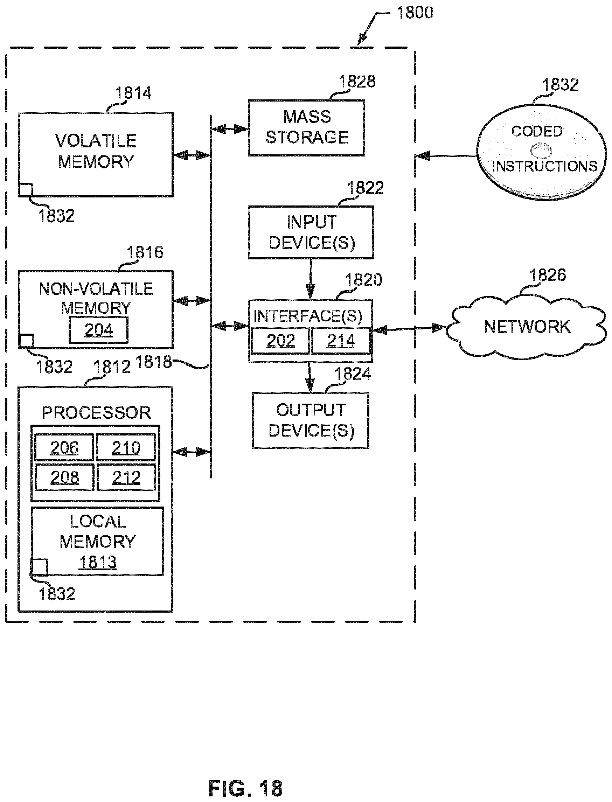

A flowchart representative of example hardware logic, machine readable instructions, hardware implemented state machines, and/or any combination thereof for implementing the example vision data analysis system 106 of FIGS. 1 and/or 2 is shown in FIGS. 15-17. The machine readable instructions may be one or more executable programs or portion(s) of an executable program for execution by a computer processor and/or processor circuitry, such as the processor 1812 shown in the example processor platform 1800 discussed below in connection with FIG. 18. The program may be embodied in software stored on a non-transitory computer readable storage medium such as a CD-ROM, a floppy disk, a hard drive, a DVD, a Blu-ray disk, or a memory associated with the processor 1812, but the entire program and/or parts thereof could alternatively be executed by a device other than the processor 1812 and/or embodied in firmware or dedicated hardware. Further, although the example program is described with reference to the flowchart illustrated in FIGS. 15-17, many other methods of implementing the example vision data analysis system 106 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 15-17 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

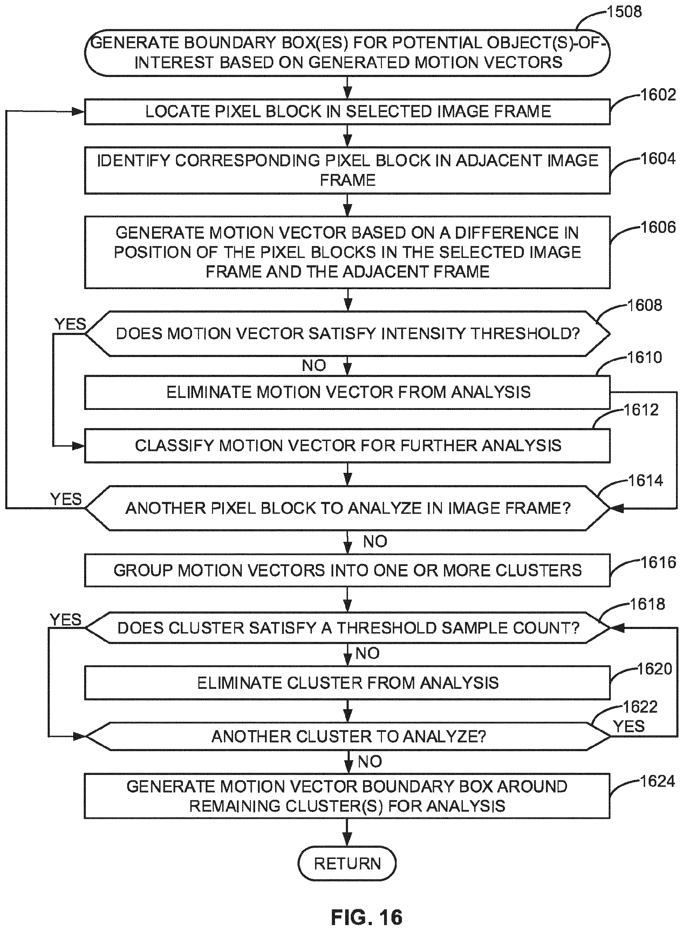

The machine-readable instructions of FIG. 15 begin at block 1502 where the example video decoder 206 decodes a video captured by camera(s) 104 of an example vehicle 102 into a series of image frames. At block 1504, the example vision data analysis system 106 selects an image frame for boundary box analysis. At block 1506, the example AI vision-based driver-assistance system analyzer 208 generates and annotates (e.g., with a label) an AI-based boundary box around an object recognized in the image frame using a trained AI model. In some examples, the AI model may be developed and/or executed in accordance with any suitable ADAS technology now existing or developed in the future. In some examples, the AI vision-based driver-assistance system analyzer 208 generates multiple AI-based boundary boxes corresponding to different objects recognized in the image frame. At block 1508, the example motion vector object detection analyzer 210 generates boundary box(es) for potential object(s)-of-interest based on generated motion vectors. Further detail regarding the implementation of block 1508 is provided below in connection with FIG. 16. In some examples, the implementation of block 1506 is independent of the implementation of block 1508. Thus, either block may be performed before the other. In some examples, block 1506 and block 1508 are performed in parallel. At block 1510, the example boundary box analyzer 212 compares the motion vector boundary box to the AI-based boundary box in the selected image frame. At block 1512, the example boundary box analyzer 212 determines whether the motion vector boundary box corresponds to an AI boundary box. If multiple AI-based boundary boxes were generated at block 1506, the example boundary box analyzer 212 may compare the motion vector boundary box generated at block 1508 to each of the different AI-based boundary boxes (at least until a match is detected). The example boundary box analyzer 212 performs analysis on one pair of boundary boxes (motion vector boundary box and an AI-based boundary box) of a selected image frame at a time. In some examples, a motion vector boundary box corresponds to or matches an AI-based boundary boxes when the boundary boxes are substantially the same size (e.g., within some threshold) and in substantially the same location (e.g., within some threshold) within the image frame. Additionally or alternatively, in some examples, correspondence between boundary boxes may be determined based on an amount of overlap between the areas defined by the boundary boxes satisfies (e.g., exceeds) a threshold.

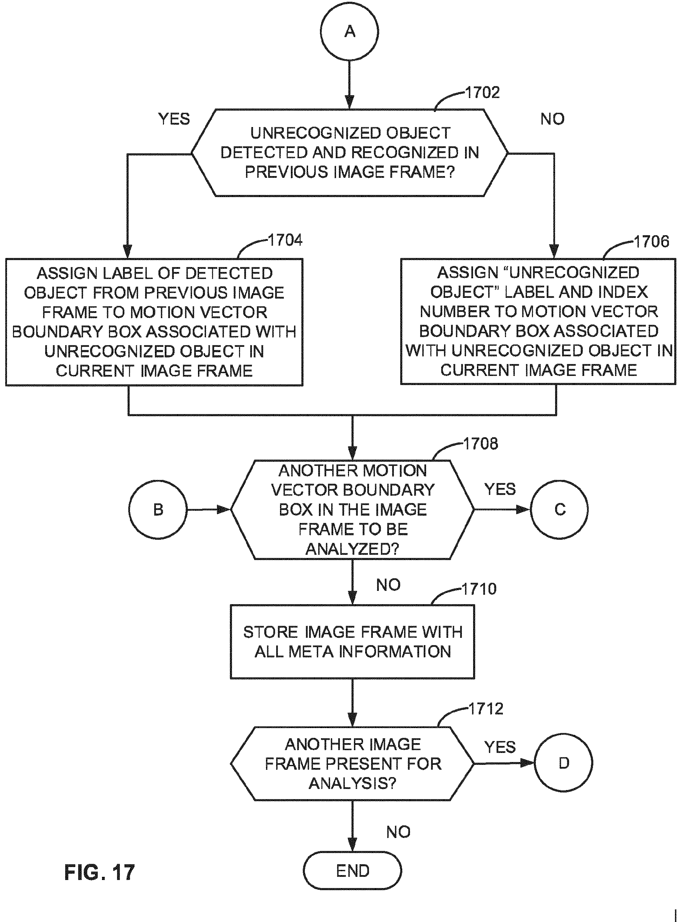

At block 1512, if the example boundary box analyzer 212 determines that the motion vector boundary box does not correspond to (e.g., does not match) an AI-based boundary box in the image frame, then it may be inferred that the objected represented by the motion vector boundary box was not recognized by the driver-assistance system analyzer 208. Accordingly, in such situations, the machine-readable instructions proceed to block 1702 of FIG. 17 where the example boundary box analyzer 212 determines whether the unrecognized object was detected and recognized by the AI vision-based driver-assistance system analyzer 208 in a previous image frame. That is, in some examples, the boundary box analyzer 212 determines whether a previously generated motion vector boundary box associated with the unrecognized object of the image frame under analysis includes a specific label that was taken from a previously generated AI-based boundary box for a different image frame when the object was recognized. At block 1702, if it is determined that the unrecognized object was detected by the AI vision-based driver-assistance system in a previous image frame, the machine-readable instructions proceed to block 1704 where the boundary box analyzer 212 assigns the label of the detected object from the previous image frame to the motion vector boundary box associated with the unrecognized object in the current image frame. However, if at block 1702 it is determined that the unrecognized object was not detected by the AI vision-based driver-assistance system analyzer 208 in a previous image frame, the machine-readable instructions proceed to block 1706 where the boundary box analyzer 212 assigns an "unrecognized object" label and an index number to the motion vector boundary box associated with the unrecognized object in the current frame. At block 1708, following each of blocks 1704 and 1706, the example boundary box analyzer 212 proceeds to determine whether there is another motion vector boundary box in the image frame to be analyzed. At block 1708, if another motion vector boundary box is identified, the example process returns to block 1510 of FIG. 15. At block 1710, the image frame and all associated meta information are stored in the example image data database 204 once no other motion vector boundary boxes in the current image frame are to be analyzed. At block 1712, the example boundary box analyzer 212 then determines whether there is another image frame for analysis. If, at block 1712, another image frame is identified, the example machine-readable instructions return to block 1504. Once no other image frame(s) are identified for analysis, the example process of FIGS 15-17 ends.

Returning to block 1512 of FIG. 15, if the example boundary box analyzer 212 determines that the motion vector boundary box corresponds to (e.g., matches) an AI-based boundary box control advances to block 1514. At block 1514, the example boundary box analyzer 212 assigns the label associated with the AI-based boundary box to the motion vector boundary box in the current image frame. At block 1516, the boundary box analyzer 212 determines whether corresponding motion vector boundary box(es) in previous image frame(s) are annotated with an "unrecognized object" label. If so, the machine-readable instructions proceed to block 1518 where the example boundary box analyzer 212 updates the previous image frame(s) to include the label corresponding to the AI-based boundary box. That is, the example boundary box analyzer 212 removes the "unrecognized object" label (previously assigned at block 1706) and assigns the label associated with the AI-based boundary box to each of the motion vector boundary box(es) in previous image frame(s). In some examples, these updates are stored in the example image data database 204. Thereafter, control proceeds to block 1520. At block 1516, if the boundary box analyzer 212 determines that corresponding motion vector boundary box(es) in previous image frame(s) are not annotated with the "unrecognized object" label (e.g., they have a specific label based on a previous match to a corresponding AI-based boundary box), control advances directly to block 1520. At block 1520, the current image frame and all associated meta information are stored in the example image data database 204. Once all image and meta information are stored, the machine-readable instructions proceed to block 1708 and subsequent blocks of FIG. 17 as previously described.

FIG. 16 is a flowchart representative of example machine-readable instructions that may be executed to implement block 1508 of FIG. 15. The machine-readable instructions of FIG. 16 begin at block 1602 where the example motion vector object detection analyzer 210 locates a pixel block in the selected image frame for analysis (e.g., the image frame selected at block 1504 of FIG. 15). At block 1604, the example motion vector object detection analyzer 210 identifies a corresponding pixel block in an adjacent image frame (e.g. an image frame preceding the selected image frame). In some examples, the adjacent image frame may be immediately adjacent the selected frame in a video stream captured by the camera(s) 104. In other examples, one or more intermediate image frames may be chronologically positioned between the adjacent image frame and the selected frame under analysis. At block 1606, example motion vector object detection analyzer 210 generates a motion vector based on a difference in position of the pixel blocks of the selected image frame and the adjacent image frame. The motion vector indicates an intensity (e.g., amount) of movement of the pixel block and a direction of movement of the pixel block between the selected and adjacent image frame. At block 1608, the example motion vector object detection analyzer 210 determines if the encoded motion vector satisfies (e.g., exceeds) an intensity threshold. If not, control advances to block 1610 where the example motion vector object detection analyzer 210 eliminates or discards the motion vector from further analysis. Thereafter, control advances to block 1614. If the example motion vector object detection analyzer 210 determines, at block 1608, that the motion vector satisfies the intensity threshold, the machine-readable instructions proceed to block 1612 to classify the motion vector for further analysis. Thereafter, control advances to block 1614 where the motion vector object detection analyzer 210 determines if another pixel block to analyze is in the selected image frame. If so, the instructions return to block 1602 to iterate through the process. If no other pixel block is to be analyzed in the image frame, at block 1616, the example motion vector object detection analyzer 210 groups motion vectors into one or more clusters. In some examples, a single cluster includes all motion vectors that are within a spatial proximity threshold of one another. At block 1618, the example motion vector object detection analyzer 210 proceeds to determine whether one of the clusters satisfies a threshold. In some examples, the threshold corresponds to sample count of motion vectors included within the cluster. In some examples, a cluster satisfies such a sample count threshold when the number of motion vectors in the cluster exceed the sample count threshold. Additionally or alternatively, in some examples, the threshold corresponds to an area or size of the cluster. In some examples, a cluster satisfies such a size threshold when the size or area of the cluster exceeds the size threshold. If the sample count threshold is not satisfied control advances to block 1620 where the example motion vector object detection analyzer 210 eliminates or discards the cluster of motion vectors from analysis. Thereafter, control advances to block 1622. If the cluster does satisfy the threshold control advances directly to block 1622. At block 1622, the example motion vector object detection analyzer 210 determines whether there is another cluster to analyze. If so, control returns to block 1618. Otherwise, control advances to block 1624 where the example motion vector object detection analyzer 210 generates a boundary box around the remaining cluster(s) of motion vectors to circumscribe the group of motion vectors. Once the motion vector boundary box(es) are generated, the instructions return to block 1510 of FIG. 15 to complete the process of FIGS. 15-17.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 18 is a block diagram of an example processor platform 1800 structured to execute the instructions of FIGS. 15-17 to implement the example vision data analysis system of FIG. 2. The processor platform 1800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 1800 of the illustrated example includes a processor 1812. The processor 1812 of the illustrated example is hardware. For example, the processor 1812 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements a video decoder 206, an AI vision-based driver-assistance system analyzer 208, a motion vector object detection analyzer 210, and a boundary box analyzer 212.

The processor 1812 of the illustrated example includes a local memory 1813 (e.g., a cache). The processor 1812 of the illustrated example is in communication with a main memory including a volatile memory 1814 and a non-volatile memory 1816 via a bus 1818. The volatile memory 1814 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 1816 may be implemented by flash memory and/or any other desired type of memory device. Access to the main memory 1814, 1816 is controlled by a memory controller.

The processor platform 1800 of the illustrated example also includes an interface circuit 1820. The interface circuit 1820 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 1822 are connected to the interface circuit 1820. The input device(s) 1822 permit(s) a user to enter data and/or commands into the processor 1012. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1824 are also connected to the interface circuit 1820 of the illustrated example. The output devices 1824 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1820 of the illustrated example, thus, typically includes a graphics driver card, a graphics driver chip and/or a graphics driver processor.

The interface circuit 1820 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1826. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1800 of the illustrated example also includes one or more mass storage devices 1828 for storing software and/or data. Examples of such mass storage devices 1828 include floppy disk drives, hard drive disks, compact disk drives, Blu-ray disk drives, redundant array of independent disks (RAID) systems, and digital versatile disk (DVD) drives.

The machine executable instructions 1832 of FIGS. 15-17 may be stored in the mass storage device 1828, in the volatile memory 1814, in the non-volatile memory 1816, and/or on a removable non-transitory computer readable storage medium such as a CD or DVD.

From the foregoing, it will be appreciated that example methods, apparatus and articles of manufacture have been disclosed that improve driver-assistance vision systems using object detection based on motion vectors. The disclosed methods, apparatus and articles of manufacture improve the efficiency of using a computing device by identifying objects that are missed or unrecognized by an AI vision-based driver-assistance system of a vehicle without the need for additional sensors on or in the vehicle. Thus, the presented solution not only mitigates added costs to vehicle production and design but also reduces the expense of time in retraining and updating the AI vision-based driver-assistance system for subsequent recognition of objects compared to other techniques. Furthermore, the examples disclosed herein also provide an opportunity for identifying images of objects that can be automatically labelled for use in subsequent training of AI systems within the vehicles. The disclosed methods, apparatus and articles of manufacture are accordingly directed to one or more improvement(s) in the functioning of a computer.

Further examples and combinations thereof include the following:
Example 1 includes an apparatus comprising a motion vector object detection analyzer to generate a motion vector boundary box around an object represented in a first image, the motion vector boundary box generated based on a comparison of the first image relative to a second image, and a boundary box analyzer to determine whether the motion vector boundary box corresponds to any artificial intelligence (AI)-based boundary box generated based on an analysis of the first image using an object detection machine learning model, and in response to the motion vector boundary box not corresponding to any AI-based boundary box generated based on the analysis of the first image, associate a label with the motion vector boundary, the label to indicate the object detection machine learning model did not recognize the object in the first image.
Example 2 includes the apparatus of example 1, wherein the motion vector object detection analyzer is to generate motion vectors for the first image based on a displacement of different blocks of pixels associated with different regions of the first image relative to corresponding blocks of pixels associated with corresponding regions of the second image.
Example 3 includes the apparatus of example 2, wherein an amount of the displacement of the blocks of pixels between the first and second images corresponds to an intensity of corresponding ones of the motion vectors, the motion vector object detection analyzer to identify a subset of the motion vectors, the intensity of each of the motion vectors in the subset being greater than an intensity threshold.
Example 4 includes the apparatus of example 3, wherein the motion vector object detection analyzer is to group different ones of the motion vectors in the subset of the motion vectors into different clusters of motion vectors based on a spatial proximity of the respective different ones of the motion vectors.
Example 5 includes the apparatus of example 4, wherein the motion vector boundary box is to eliminate ones of the clusters that do not satisfy a cluster threshold, the motion vector boundary box corresponding to a remaining one of the clusters, the motion vector boundary box to circumscribe the remaining one of the clusters.
Example 6 includes the apparatus of example 5, wherein the cluster threshold corresponds to a threshold number of the motion vectors included in the cluster.
Example 7 includes the apparatus of example 5, wherein the cluster threshold corresponds to at least one of a size or an area of a boundary surrounding the motion vectors included in the cluster.
Example 8 includes the apparatus of example 5, wherein the label is a first label, and a first AI-based boundary box is generated based on the analysis of the first image, the first AI-based boundary box associated with a second label identifying an object class for the object, the boundary box analyzer to, in response to the motion vector boundary box corresponding to the first AI-based boundary box, associate the second label with the motion vector boundary box.
Example 9 includes the apparatus of example 8, wherein the motion vector boundary box is a first motion vector boundary box, the motion vector object detection analyzer to generate a second motion vector boundary box around the object represented in a third image, the boundary box analyzer to determine that the second motion vector boundary box does not correspond to any AI-boundary box generated based on an analysis of the second image using the object detection machine learning model, and associate the first label with the second motion vector boundary box.
Example 10 includes the apparatus of example 1, wherein the motion vector boundary box is a first motion vector boundary box, and the label is a first label, the motion vector object detection analyzer to generate a second motion vector boundary box around the object represented in a third image, the boundary box analyzer to determine that the second motion vector boundary box corresponds to an AI-boundary box generated based on an analysis of the second image, the AI-based boundary box circumscribing the object represented in the third image, the AI-based boundary box associated with a second label identifying an object class for the object, and associate the second label with the second motion vector boundary box.
Example 11 includes the apparatus of example 10, wherein the boundary box analyzer is to remove the first label associated with the first motion vector boundary box, and associate the second label with the first motion vector boundary box.
Example 12 includes the apparatus of example 1, wherein the boundary box analyzer is to identify the first image to be included in a subsequent image training set for the object detection machine learning model.
Example 13 includes the apparatus of example 1, wherein the first image is captured by a camera mounted to a vehicle.
Example 14 includes the apparatus of example 13, wherein the motion vector object detection analyzer and the boundary box analyzer are carried by the vehicle.
Example 15 includes the apparatus of example 14, further including an AI vision-based driver-assistance system analyzer to execute the object detection machine learning model, the AI vision-based driver-assistance system analyzer to be carried by the vehicle.
Example 16 includes a method comprising generating, by executing an instruction with at least one processor, a motion vector boundary box around an object represented in a first image, the motion vector boundary box generated based on a comparison of the first image relative to a second image, determining, by executing an instruction with the at least one processor, whether the motion vector boundary box corresponds to any artificial intelligence (AI)-based boundary box generated based on an analysis of the first image using an object detection machine learning model, and in response to the motion vector boundary box not corresponding to any AI-based boundary box generated based on the analysis of the first image, associating, by executing an instruction with the at least one processor, a label with the motion vector boundary, the label to indicate the object detection machine learning model did not recognize the object in the first image.
Example 17 includes the method of example 16, further including generating motion vectors for the first image based on a displacement of different blocks of pixels associated with different regions of the first image relative to corresponding blocks of pixels associated with corresponding regions of the second image.
Example 18 includes the method of example 17, wherein an amount of the displacement of the blocks of pixels between the first and second images corresponds to an intensity of corresponding ones of the motion vectors, the method further including identifying a subset of the motion vectors, the intensity of each of the motion vectors in the subset being greater than an intensity threshold.
Example 19 includes the method of example 18, further including grouping different ones of the motion vectors in the subset of the motion vectors into different clusters of motion vectors based on a spatial proximity of the respective different ones of the motion vectors.
Example 20 includes the method of example 19, further including eliminating ones of the clusters that do not satisfy a cluster threshold, the motion vector boundary box corresponding to a remaining one of the clusters, the motion vector boundary box to circumscribe the remaining one of the clusters.
Example 21 includes the method of example 20, wherein the cluster threshold corresponds to a threshold number of the motion vectors included in the cluster.
Example 22 includes the method of example 20, wherein the cluster threshold corresponds to at least one of a size or an area of a boundary surrounding the motion vectors included in the cluster.
Example 23 includes the method of example 20, wherein the label is a first label, and a first AI-based boundary box is generated based on the analysis of the first image, the first AI-based boundary box associated with a second label identifying an object class for the object, the method further including in response to the motion vector boundary box corresponding to the first AI-based boundary box, associating the second label with the motion vector boundary box.
Example 24 includes the method of example 23, wherein the motion vector boundary box is a first motion vector boundary box, the method further including generating a second motion vector boundary box around the object represented in a third image, determining that the second motion vector boundary box does not correspond to any AI-boundary box generated based on an analysis of the second image using the object detection machine learning model, and associate the first label with the second motion vector boundary box.
Example 25 includes the method of example 16, wherein the motion vector boundary box is a first motion vector boundary box, and the label is a first label, the method further including generating a second motion vector boundary box around the object represented in a third image, determining that the second motion vector boundary box corresponds to an AI-boundary box generated based on an analysis of the second image, the AI-based boundary box circumscribing the object represented in the third image, the AI-based boundary box associated with a second label identifying an object class for the object, and associate the second label with the second motion vector boundary box.
Example 26 includes the method of example 25, further including removing the first label associated with the first motion vector boundary box, and associating the second label with the first motion vector boundary box.
Example 27 includes the method of example 16, further identifying the first image to be included in a subsequent image training set for the object detection machine learning model.
Example 28 includes a non-transitory computer readable medium comprising instructions that, which executed, cause at least one processor to generate a motion vector boundary box around an object represented in a first image, the motion vector boundary box generated based on a comparison of the first image relative to a second image, determine whether the motion vector boundary box corresponds to any artificial intelligence (AI)-based boundary box generated based on an analysis of the first image using an object detection machine learning model, and in response to the motion vector boundary box not corresponding to any AI-based boundary box generated based on the analysis of the first image, associate a label with the motion vector boundary, the label to indicate the object detection machine learning model did not recognize the object in the first image.
Example 29 includes the non-transitory computer readable medium of example 28, wherein the instructions further cause the at least one processor to generate motion vectors for the first image based on a displacement of different blocks of pixels associated with different regions of the first image relative to corresponding blocks of pixels associated with corresponding regions of the second image.
Example 30 includes the non-transitory computer readable medium of example 29, wherein an amount of the displacement of the blocks of pixels between the first and second images corresponds to an intensity of corresponding ones of the motion vectors, the instructions to cause the at least one processor to identify a subset of the motion vectors, the intensity of each of the motion vectors in the subset associated being greater than an intensity threshold.
Example 31 includes the non-transitory computer readable medium of example 30, wherein the instructions further cause the at least one processor to group different ones of the motion vectors in the subset of the motion vectors into different clusters of motion vectors based on a spatial proximity of the respective different ones of the motion vectors.
Example 32 includes the non-transitory computer readable medium of example 31, wherein the instructions further cause the at least one processor to eliminate ones of the clusters that do not satisfy a cluster threshold, the motion vector boundary box corresponding to a remaining one of the clusters, the motion vector boundary box to circumscribe the remaining one of the clusters.
Example 33 includes the non-transitory computer readable medium of example 32, wherein the cluster threshold corresponds to a threshold number of the motion vectors included in the cluster.
Example 34 includes the non-transitory computer readable medium of example 32, wherein the cluster threshold corresponds to at least one of a size or an area of a boundary surrounding the motion vectors included in the cluster.
Example 35 includes the non-transitory computer readable medium of example 32, wherein the label is a first label, and a first AI-based boundary box is generated based on the analysis of the first image, the first AI-based boundary box associated with a second label identifying an object class for the object, the instructions to cause the at least one processor to associate the second label with the motion vector boundary box in response to a determination that the motion vector boundary box corresponds to the first AI-based boundary box.
Example 36 includes the non-transitory computer readable medium of example 35, wherein the motion vector boundary box is a first motion vector boundary box, the instructions to cause the at least one processor to generate a second motion vector boundary box around the object represented in a third image, determine that the second motion vector boundary box does not correspond to any AI-boundary box generated based on an analysis of the second image using the object detection machine learning model, and associate the first label with the second motion vector boundary box.
Example 37 includes the non-transitory computer readable medium of example 28, wherein the motion vector boundary box is a first motion vector boundary box, and the label is a first label, the instructions to cause the at least one processor to generate a second motion vector boundary box around the object represented in a third image, determine that the second motion vector boundary box corresponds to an AI-boundary box generated based on an analysis of the second image, the AI-based boundary box circumscribing the object represented in the third image, the AI-based boundary box associated with a second label identifying an object class for the object, and associate the second label with the second motion vector boundary box.
Example 38 includes the non-transitory computer readable medium of example 37, wherein the instructions further cause the at least one processor to remove the first label associated with the first motion vector boundary box, and associate the second label with the first motion vector boundary box.
Example 39 includes the non-transitory computer readable medium of example 28, the instructions to further cause the processor to identify the first image to be included in a subsequent image training set for the object detection machine learning model.
Example 40 includes an apparatus comprising means for generating a motion vector boundary box around an object represented in a first image, the motion vector boundary box generated based on a comparison of the first image relative to a second image, and means for analyzing boundary boxes to determine whether the motion vector boundary box corresponds to any artificial intelligence (AI)-based boundary box generated based on an analysis of the first image using an object detection machine learning model, and in response to the motion vector boundary box not corresponding to any AI-based boundary box generated based on the analysis of the first image, associate a label with the motion vector boundary, the label to indicate the object detection machine learning model did not recognize the object in the first image.
Example 41 includes the apparatus of example 40, wherein the generating means is to generate motion vectors for the first image based on a displacement of different blocks of pixels associated with different regions of the first image relative to corresponding blocks of pixels associated with corresponding regions of the second image.
Example 42 includes the apparatus of example 41, wherein an amount of the displacement of the blocks of pixels between the first and second images corresponds to an intensity of corresponding ones of the motion vectors, the generating means to identify a subset of the motion vectors, the intensity of each of the motion vectors in the subset being greater than an intensity threshold.
Example 43 includes the apparatus of example 42, wherein the generating means is to group different ones of the motion vectors in the subset of the motion vectors into different clusters of motion vectors based on a spatial proximity of the respective different ones of the motion vectors.
Example 44 includes the apparatus of example 43, wherein the motion vector boundary box is to eliminate ones of the clusters that do not satisfy a cluster threshold, the motion vector boundary box corresponding to a remaining one of the clusters, the motion vector boundary box to circumscribe the remaining one of the clusters.
Example 45 includes the apparatus of example 44, wherein the cluster threshold corresponds to a threshold number of the motion vectors included in the cluster.
Example 46 includes the apparatus of example 44, wherein the cluster threshold corresponds to at least one of a size or an area of a boundary surrounding the motion vectors included in the cluster.
Example 47 includes the apparatus of example 44, wherein the label is a first label, and a first AI-based boundary box is generated based on the analysis of the first image, the first AI-based boundary box associated with a second label identifying an object class for the object, the analyzing means to, in response to the motion vector boundary box corresponding to the first AI-based boundary box, associate the second label with the motion vector boundary box.
Example 48 includes the apparatus of example 47, wherein the motion vector boundary box is a first motion vector boundary box, the generating means to generate a second motion vector boundary box around the object represented in a third image, the analyzing means to determine that the second motion vector boundary box does not correspond to any AI-boundary box generated based on an analysis of the second image using the object detection machine learning model, and associate the first label with the second motion vector boundary box.
Example 49 includes the apparatus of example 40, wherein the motion vector boundary box is a first motion vector boundary box, and the label is a first label, the generating means to generate a second motion vector boundary box around the object represented in a third image, the analyzing means to determine that the second motion vector boundary box corresponds to an AI-boundary box generated based on an analysis of the second image, the AI-based boundary box circumscribing the object represented in the third image, the AI-based boundary box associated with a second label identifying an object class for the object, and associate the second label with the second motion vector boundary box.
Example 50 includes the apparatus of example 49, wherein the analyzing means is to remove the first label associated with the first motion vector boundary box, and associate the second label with the first motion vector boundary box.
Example 51 includes the apparatus of example 40, wherein the analyzing means is to identify the first image to be included in a subsequent image training set for the object detection machine learning model. his text box.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus comprising:
a motion vector object detection analyzer to generate a motion vector boundary box around an object represented in a first image, the motion vector boundary box generated based on a comparison of the first image relative to a second image; and
a boundary box analyzer to:
determine whether the motion vector boundary box corresponds to any artificial intelligence (AI)-based boundary box generated based on an analysis of the first image using an object detection machine learning model; and
in response to the motion vector boundary box not corresponding to any AI-based boundary box generated based on the analysis of the first image, associate a label with the motion vector boundary, the label to indicate the object detection machine learning model did not recognize the object in the first image.

2. The apparatus of claim 1, wherein the motion vector boundary box is a first motion vector boundary box, and the label is a first label, the motion vector object detection analyzer to generate a second motion vector boundary box around the object represented in a third image, the boundary box analyzer to:
determine that the second motion vector boundary box corresponds to an AI-boundary box generated based on an analysis of the second image, the AI-based boundary box circumscribing the object represented in the third image, the AI-based boundary box associated with a second label identifying an object class for the object; and
associate the second label with the second motion vector boundary box.

3. The apparatus of claim 2, wherein the boundary box analyzer is to:
remove the first label associated with the first motion vector boundary box; and
associate the second label with the first motion vector boundary box.

4. The apparatus of any of one of claims 1 -3, wherein the boundary box analyzer is to identify the first image to be included in a subsequent image training set for the object detection machine learning model.

5. The apparatus of any of one of claims 1 -4, wherein the first image is captured by a camera mounted to a vehicle.

6. The apparatus of claim 5, wherein the motion vector object detection analyzer and the boundary box analyzer are carried by the vehicle.

7. The apparatus of claim 6, further including an AI vision-based driver-assistance system analyzer to execute the object detection machine learning model, the AI vision-based driver-assistance system analyzer to be carried by the vehicle.

8. A method comprising:
generating, by executing an instruction with at least one processor, a motion vector boundary box around an object represented in a first image, the motion vector boundary box generated based on a comparison of the first image relative to a second image;
determining, by executing an instruction with the at least one processor, whether the motion vector boundary box corresponds to any artificial intelligence (AI)-based boundary box generated based on an analysis of the first image using an object detection machine learning model; and
in response to the motion vector boundary box not corresponding to any AI-based boundary box generated based on the analysis of the first image, associating, by executing an instruction with the at least one processor, a label with the motion vector boundary, the label to indicate the object detection machine learning model did not recognize the object in the first image.

9. The method of claim 8, further including generating motion vectors for the first image based on a displacement of different blocks of pixels associated with different regions of the first image relative to corresponding blocks of pixels associated with corresponding regions of the second image.

10. The method of claim 9, wherein an amount of the displacement of the blocks of pixels between the first and second images corresponds to an intensity of corresponding ones of the motion vectors, the method further including identifying a subset of the motion vectors, the intensity of each of the motion vectors in the subset being greater than an intensity threshold.

11. The method of claim 10, further including grouping different ones of the motion vectors in the subset of the motion vectors into different clusters of motion vectors based on a spatial proximity of the respective different ones of the motion vectors.

12. The method of claim 11, further including eliminating ones of the clusters that do not satisfy a cluster threshold, the motion vector boundary box corresponding to a remaining one of the clusters, the motion vector boundary box to circumscribe the remaining one of the clusters.

13. The method of claim 12, wherein the label is a first label, and a first AI-based boundary box is generated based on the analysis of the first image, the first AI-based boundary box associated with a second label identifying an object class for the object, the method further including in response to the motion vector boundary box corresponding to the first AI-based boundary box, associating the second label with the motion vector boundary box.

14. The method of claim 13, wherein the motion vector boundary box is a first motion vector boundary box, the method further including:
generating a second motion vector boundary box around the object represented in a third image;
determining that the second motion vector boundary box does not correspond to any AI-boundary box generated based on an analysis of the second image using the object detection machine learning model; and
associating the first label with the second motion vector boundary box.

15. A computer readable medium comprising instructions that, when executed, cause at least one processor to implement the method of any one of claims 8-14.
